# EUROPEAN PATENT SPECIFICATION

(11) **EP 0 584 545 B1**
(45) Date of publication and mention of the grant of the patent: **09.10.1996**
(21) Application number: 93111866.5
(22) Date of filing: 23.07.1993
(51) Int. Cl.: F21V 8/00

(54) **Lighting device**
Beleuchtungseinrichtung
Dispositif d'éclairage

(30) Priority: 24.07.1992 IT TO920637
(43) Date of publication of application: 02.03.1994
(73) Proprietor: MAGNETI MARELLI S.p.A., I-20145 Milano (IT)
(72) Inventor: Masuelli, Stefania, I-10043 Orbassano (IT); Perlo, Pietro, I-12048 Sommariva Del Bosco (IT)
(74) Representative: Jorio, Paolo

(56) References cited:
- WO-A-90/07766
- IBM TECHNICAL DISCLOSURE BULLETIN vol. 33, no. 9 , February 1991 , ARMONK,NY. US pages 261 - 262 'high efficiency backlight for lcd'
- PATENT ABSTRACTS OF JAPAN vol. 14, no. 436 (M-1027)18 September 1990 & JP-A-02 172 101 (STANLEY ELECTRIC CO LTD) 3 July 1990
- PATENT ABSTRACTS OF JAPAN vol. 16, no. 489 (P-1433)9 October 1992 & JP-A-04 175 702 (SANYO ELECTRIC CO LTD) 23 June 1992

## Description

The present invention relates to a lighting device which is particularly suitable for use in lighting both on the inside and on the outside of a motor vehicle.

Lighting devices designed for this use in which the light flux is generated by an emitting surface, are known e.g., from the IBM Technical disclosure Bullettin, vol. 33, no. 9 of February 1991; these devices comprise a source of light radiation in which the light is directed in a substantially parallel direction to the emitting surface and a plurality of optical devices which are able to transmit the light rays from the source in predetermined directions. The abovementioned means are usually made up of lenses, directional prisms, reflectors, diffusers or of systems of such prisms.

Devices of this type have proved to be somewhat complex in terms of construction as a result of the large number of components and of the shape of some of these; also, the light flux produced using these devices cannot meet all the requirements set in connection with motor vehicle lighting; furthermore, because such devices take up a lot of space, they cannot be used in certain cases owing to the limited space available for housing them.

The object of the present invention is to produce a lighting device, in particular for use on motor vehicles, which overcomes the drawbacks described and, therefore, which is structurally very simple, compact, and able to emit a light flux having the desired optical characteristics.

This object is achieved through a lighting device as claimed in Claim 1.

In order to give a clearer idea of the lighting device of the invention, a more detailed description will now be given by way of example and with reference to the figures of the attached drawings in which:
Fig. 1 is a perspective view of a part of the device;
Fig. 2 is a cross-section thereof.

The device basically comprises a block of transparent material 1 delimited by a pair of converging surfaces, a front surface 2 and a rear surface 3, and a source of light radiation, indicated as a whole by the reference 4, and which is located between the planes bearing the abovementioned surfaces. Cavities 5 are formed in the rear converging surface 3, each of which cavities is delimited at least by one surface 6 which forms a predetermined angle with the rear converging surface 3; this angle is selected, as will be more fully described later, so that the rays emitted by the light source 4 and which are incident on the surfaces 6 are reflected towards the front surface 2.

According to a variant embodiment not shown, there are no cavities 5 in the rear surface 3: instead, a layer of material having total reflection and high scattering properties is deposited thereon.

Diffraction means 7 of a known type, either with phase modulation or with intensity modulation or consisting of holograms (for example of the computer generated holograms type) are located on the front surface 2; advantageously these diffraction means 7 can make up a set of lenses 8 of the Fresnel or Kinoform type. These lenses can be circular, as shown in the figure, or else they can be square, rectangular, hexagonal or pentagonal. There can be any number of lenses 8, these being connected together by a supporting element 9 and usually arranged so as to completely cover the front surface 2.

The diffraction means 7 can comprise reliefs which are cut directly into the front surface 2, or which can be formed on a supporting sheet made of a suitable material which is then attached to the abovementioned surface. The diffraction means can form part of a computer generated hologram of the type with phase modulation or with amplitude modulation, which hologram is recorded directly on the front surface 2, or on a support of transparent material which is then attached to said surface; this hologram can be of any type known per se and able to produce any pattern and which therefore can comprise, for example, a plurality of adjacent holograms so as to obtain a predetermined distribution of the light flux emitted.

The reliefs on the diffraction means 7 can be produced, in a known manner, from a master diffraction surface which is prepared for example using a multilevel process of the type with binary diffractive optics; replication can be carried out using microelectronics, by means of direct moulding, by means of "embossing" or by means of any other technique used in the replication of diffractive optics.

If the element 9 supporting the diffractive reliefs is made of a sheet of plastic, the latter can be advantageously attached to the surface 2 using a suitable adhesive and can be covered with a suitable protective layer.

Each of the cavities 5 advantageously consists of a longitudinal groove formed in the rear converging surface 3, while the light source 4 is housed in another longitudinal groove 10 in the block, set in the top surface 11 of said block. The groove 10 is shaped so as to maximise the coupling between the source and the light guide. For this purpose a mastic or more generally an adhesive having a suitable refractive index can be placed between the source and the light guide. Advantageously the source of light radiation 4 is a linear source and can be given a reflective coating 19 so as to increase the overall efficiency of the system. The axis is parallel that of the groove in which said source is housed. According to an alternative version, this source comprises a plurality of light emitters (not shown) arranged along an axis which is substantially parallel to that of the groove in which said source is housed.

The lighting device described works in the following way.

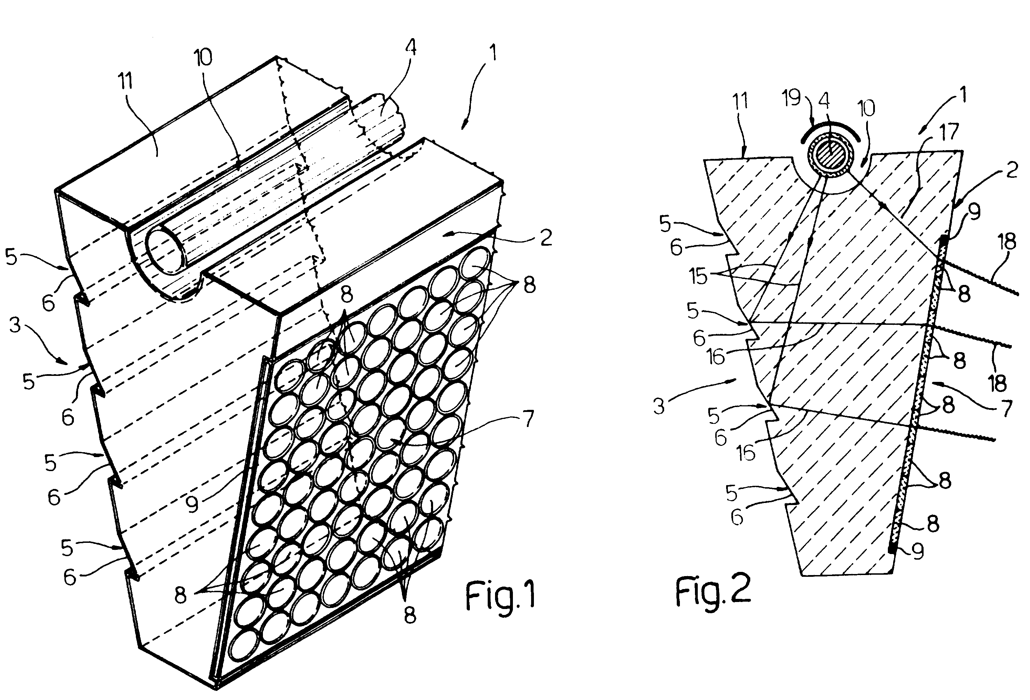

A light ray 15 (Fig. 2) emitted by the source of light radiation 4 towards the rear surface 3 is incident on the surfaces 6 of the cavities 5 and is reflected by them towards the front converging surface 2, thereby forming a ray 16; this ray is incident on the diffractive projections of one of the lenses 8, is diffracted by them and emerges from said lenses to form the ray 18. The rays 17 from the light source 4 which are directed towards the front converging surface 2 are directly incident on the lenses 8 and they too emerge therefrom in the form of diffracted rays 18.

By suitably selecting the pattern of projections of the lenses 8 it is possible to obtain, from the rays emitted by the surface 2, a predetermined distribution of the light flux because as a result of the diffractive action exerted by said lenses it is possible to control, at each point of the light flux emitted by the device, the direction and the intensity of the light emitted, in such a way that said flux is distributed in a predetermined pattern. In this way the light flux is distributed in a way similar to that obtained using the usual prism means found in lighting devices of the prior art.

The particular pattern of diffractive reliefs of the lenses 8 can also be used to effect chromatic control over the light flux exiting the surface 2. This is because the action exerted by these lenses on the incident rays also depends on the wavelength of the rays themselves: it is therefore possible to obtain a light flux exiting the device which is of a predetermined colour or which has a desired chromatic distribution within the flux itself. This feature enables particular light patterns to be obtained and lends itself therefore to generating effects which are particularly useful in the production of lighting devices for use on motor vehicles.

In the case where the device of the invention does not have any cavities 5, and the rear surface 3 is smooth and coated with a layer of material having total reflection and high scattering properties, rays (similar to the rays 16 in Fig. 2) strike the diffraction means 7 after originating from the source 4 and being reflected by said surface; hence, the operating method described earlier applies in this case also.

It is clear that modifications and variations may be made to the described embodiments of the present invention without departing from the scope of the invention itself.

In particular, the device can consist of a block of transparent material delimited by a pair of surfaces, a front surface 2 and a rear surface 3, which are mutually parallel rather than convergent, as has been described with reference to the preceding embodiments; thus, in this case too, the rays emitted by the light source 4 are reflected by the rear surface 3 towards the diffraction means 7 located on the front surface 2, and are diffracted by these means to give the desired light flux.

## Claims

1. Lighting device comprising a block (1) of transparent material delimited by a pair of opposite surfaces, a front surface (2) and a rear surface (3), and a source of light radiation (4) located between the planes bearing said surfaces, said rear surface (3) being provided with means capable of reflecting the light rays from said source which are incident on said rear surface towards said front surface; characterised in that
- diffraction means (7) are located on said front surface (2), on which means the light rays reflected by said rear surface (3) are incident and by which means these rays are diffracted so as to give a light flux, emerging from said front surface (2), having predetermined optical characteristics;
- said diffraction means being constituted by a plurality of single diffraction elements carried side by side on said front surface (2).

2. Device according to Claim 1, characterised in that said front (2) and rear (3) opposite surfaces of said block are convergent in the direction opposite to said light source (4).

3. Device according to Claim 1 or 2, characterised in that cavities (5) are formed in said rear surface (3), each of which cavities is delimited at least by one surface (6) which forms a predetermined angle with said rear surface (3), so as that relieves are formed on said rear surface (3).

4. Device according to Claim 3, characterised in that each of said cavities (5) consists of a longitudinal groove formed in said rear surface (3), said light source being housed in another longitudinal groove (10) in said block.

5. Device according to Claims 1, 2 or 3, characterised in that a layer of material having total reflection and high scattering properties is deposited on said rear surface (3).

6. Device according to one of the preceding claims, characterised in that said diffraction means (7) comprise a plurality of diffractive lenses (8).

7. Device according to Claim 6, characterised in that said diffractive lenses are of the Fresnel or Kinoform type.

8. Device according to one of the preceding claims, characterised in that said diffraction means (7) are of the type with phase modulation.

9. Device according to one of Claims 1 to 7, characterised in that said diffraction means (7) are ofthe type with amplitude modulation.

10. Device according to one of the preceding claims, characterised in that said diffraction means (7) comprise diffractive projections located on said front surface (2), so as to form a predetermined configuration.

11. Device according to claim 10 characterised in that said diffractive projections are cut into said front surface (2) of the block of transparent material (1).

12. Device according to claim 10 characterised in that said diffractive projections are formed on a sheet of material (9) which is attached to said front surface (2) of said block block of transparent material.

13. Device according to one of the preceding claims, characterised in that said diffraction means (7) comprise at least one hologram of the computer generated hologram type.

14. Device according to Claim 13, characterised in that said diffraction means (7) comprise a series of independent holograms, arranged next to one another.

15. Device according to one of the claims 13 or 14 characterised in that said hologram is recorded on said front surface (2) of said block of transparent material.

16. Device according to one of the claims 13 or 14 characterised in that said hologram is recorded on a sheet of material which is attached to said front surface (2) of said block oftransparent material.

17. Device according to one of the claims 4 to 16 characterised in that said source of light radiation (4) is a light source whose axis is parallel to that of said groove (10) in which said source is housed.

18. Device according to one of the claims 4 to 16, characterised in that said source of light radiation (4) comprises a plurality of light emitters arranged along an axis which is substantially parallel to that of said groove in which said source is housed.

## Patentansprüche

1. Beleuchtungseinrichtung, umfassend einen Block (1) aus transparentem Material, der begrenzt ist durch ein Paar gegenüberliegender Oberflächen, einer Frontoberfläche (2) und einer rückwärtigen Oberfläche (3), und eine Lichtstrahlungsquelle (4), die zwischen den Ebenen, die die Oberflächen haben, angeordnet ist, wobei die rückwärtige Oberfläche (3) mit Mitteln versehen ist, die in der Lage sind, die Lichtstrahlen von der Quelle, die auf die rückwärtige Oberfläche auftreffen, in Richtung auf die Frontoberfläche zu reflektieren; **dadurch gekennzeichnet**, daß
- Brechungsmittel (7) auf der Frontoberfläche (2) angeordnet sind, auf welche Mittel die von der rückwärtigen Oberfläche (3) reflektierten Lichtstrahlen auftreffen und mittels welcher Mittel diese Strahlen gebrochen werden, so daß ein Lichtfluß, der von der Frontoberfläche (2) ausgeht, vorgegebene optische Charakteristiken aufweist;
- wobei die Brechungsmittel von einer Mehrzahl von einzelnen Brechungselementen, die nebeneinander auf der Frontoberfläche (2) gehalten sind, gebildet sind.

2. Einrichtung nach Anspruch 1, dadurch gekennzeichnet, daß die gegenüberliegenden Front- (2) und rückwärtige (3) Oberflächen des Blocks in die zu der Lichtquelle (4) entgegengesetzte Richtung konvergieren.

3. Einrichtung nach Anspruch 1 oder 2, dadurch gekennzeichnet, daß Hohlräume (5) in der rückwärtigen Oberfläche (3) gebildet sind, wobei jeder dieser Hohlräume von wenigstens einer Oberfläche (6) begrenzt ist, die einen vorgegebenen Winkel mit der rückwärtigen Oberfläche (3) bildet, so daß Reliefe auf der rückwärtigen Oberfläche (3) gebildet werden.

4. Einrichtung nach Anspruch 3, dadurch gekennzeichnet, daß jeder der Hohlräume (5) aus einer Längsnut besteht, die in der rückwärtigen Oberfläche (3) gebildet ist, wobei die Lichtquelle in einer weiteren Längsnut (10) in dem Block untergebracht ist.

5. Einrichtung nach Anspruch 1, 2, oder 3, dadurch gekennzeichnet, daß eine Materialschicht mit vollständiger Reflexion und hohen Streuungseigenschaften auf der rückwärtigen Oberfläche (3) aufgebracht ist.

6. Einrichtung nach einem der vorhergehenden Ansprüche, dadurch gekennzeichnet, daß die Brechungsmittel (7) eine Mehrzahl von Brechungslinsen (8) umfassen.

7. Einrichtung nach Anspruch 6, dadurch gekennzeichnet, daß die Brechungslinsen der Fresnel- oder Kinoform-Bauart sind.

8. Einrichtung nach einem der vorhergehenden Ansprüche, dadurch gekennzeichnet, daß die Brechungsmittel (7) der Bauart mit Phasenmodulation sind.

9. Einrichtung nach einem der Ansprüche 1 bis 7, dadurch gekennzeichnet, daß die Brechungsmittel (7) der Bauart mit Amplitudenmodulation sind.

10. Einrichtung nach einem der vorhergehenden Ansprüche, dadurch gekennzeichnet, daß die Brechungsmittel (7) Brechungsvorsprünge aufweisen, die auf der Frontoberfläche (2) angeordnet sind zur Bildung einer vorgegebenen Konfiguration.

11. Einrichtung nach Anspruch 10, dadurch gekennzeichnet, daß die Brechungsvorsprünge in die Frontoberfläche (2) des Blocks aus transparentem Material (1) hineingeschnitten sind.

12. Einrichtung nach Anspruch 10, dadurch gekennzeichnet, daß die Brechungsvorsprünge auf einer Materialbahn (9), die mit der Frontoberfläche (2) des Blocks aus transparentem Material verbunden ist, gebildet sind.

13. Einrichtung nach einem der vorhergehenden Ansprüche, dadurch gekennzeichnet, daß die Brechungsmittel (7) wenigstens ein Hologramm des computergenerierten Hologrammtyps umfassen.

14. Einrichtung nach Anspruch 13, dadurch gekennzeichnet, daß die Brechungsmittel (7) eine Serie von unabhängigen Hologrammen, die nebeneinander angeordnet sind, umfassen.

15. Einrichtung nach einem der Ansprüche 13 oder 14, dadurch gekennzeichnet, daß das Hologramm auf der Frontoberfläche (2) des Blocks aus transparentem Material aufgenommen ist.

16. Einrichtung nach einem der Ansprüche 13 oder 14, dadurch gekennzeichnet, daß das Hologramm auf einer Materialbahn aufgenommen ist, die mit der Frontoberfläche (2) des Blocks aus transparentem Material verbunden ist.

17. Einrichtung nach einem der Ansprüche 4 bis 16, dadurch gekennzeichnet, daß die Lichtstrahlungsquelle (4) eine Lichtquelle ist, deren Achse parallel zu der der Nut (10), in der die Quelle untergebracht ist, verläuft.

18. Einrichtung nach einem der Ansprüche 4 bis 16, dadurch gekennzeichnet, daß die Lichtstrahlungsquelle (4) eine Mehrzahl von Lichtsendern umfaßt, die entlang einer Achse angeordnet sind, die im wesentlichen parallel zu der der Nut verläuft, in der die Lichtquelle untergebracht ist.

## Revendications

1. Dispositif d'éclairage comprenant un bloc (1) de matériau transparent délimité par une paire de surfaces opposées, une surface avant (2) et une surface arrière (3), et une source d'irradiation de lumière (4) disposée entre les plans supportant lesdites surfaces, ladite surface arrière (3) étant munie de moyens capables de réfléchir les rayons de lumière provenant de ladite source qui sont incidents sur ladite surface arrière vers ladite surface avant, caractérisé en ce que:
- des moyens de diffraction (7) sont disposés sur ladite surface avant (2), sur lesquels moyens les rayons de lumière réfléchis par ladite surface arrière (3) sont incidents et par ces moyens ces rayons sont diffractés de façon à fournir un flux de lumière sortant à partir de ladite surface avant (2) et ayant des caractéristiques optiques prédéterminées;
- lesdits moyens de diffraction étant constitués par une pluralité d'éléments de diffraction individuels supportés côte à côte sur ladite surface avant (2).

2. Dispositif selon la revendication 1, caractérisé en ce que lesdites surfaces opposées avant (2) et arrière (3) dudit bloc convergent dans la direction opposée à ladite source de lumière (4).

3. Dispositif selon la revendication 1 ou 2, caractérisé en ce que des cavités (5) sont formées dans ladite surface arrière (3), chacune desdites cavités est délimitée par au moins une surface (6) qui forme un angle prédéterminé avec ladite surface arrière (3), si bien que des dégagements sont formés sur ladite surface arrière (3).

4. Dispositif selon la revendication 3, caractérisé en ce que chacune desdites cavités (5) se compose d'une rainure longitudinale formée dans ladite surface arrière (3), ladite source de lumière étant logée dans une autre rainure longitudinale (10) ménagée dans ledit bloc.

5. Dispositif selon les revendications 1, 2 ou 3, caractérisé en ce qu'une couche de matériau ayant une réflexion totale et des propriétés de dispersion élevées est déposée sur ladite surface arrière (3).

6. Dispositif selon l'une des revendications précédentes, caractérisé en ce que lesdits moyens de diffraction (7) comprennent une pluralité de lentilles de diffraction (8).

7. Dispositif selon la revendication 6, caractérisé en ce que lesdites lentilles de diffraction sont du type de Fresnel ou Kinoform.

8. Dispositif selon l'une des revendications précédentes, caractérisé en ce que lesdits moyens de diffraction (7) sont du type à modulation de phase.

9. Dispositif selon l'une des revendications 1 à 7, caractérisé en ce que lesdits moyens de diffraction (7) sont du type à modulation d'amplitude.

10. Dispositif selon l'une des revendications précédentes, caractérisé en ce que lesdits moyens de diffraction (7) comprennent des saillies de diffraction situées sur ladite surface avant (2) afin de former une configuration prédéterminée.

11. Dispositif selon la revendication 10, caractérisé en ce que lesdites saillies de diffraction sont découpées dans ladite surface avant (2) du bloc de matériau transparent (1).

12. Dispositif selon la revendication 10, caractérisé en ce que lesdites saillies de diffraction sont formées sur une feuille de matériau (9) qui est fixée à ladite surface avant (2) dudit bloc de matériau transparent.

13. Procédé selon l'une des revendications précédentes, caractérisé en ce que lesdits moyens de diffraction (7) comprennent au moins un hologramme du type hologramme généré par ordinateur.

14. Dispositif selon la revendication 13, caractérisé en ce que lesdits moyens de diffraction (7) comprennent une série d'hologrammes indépendants disposés les uns à côté des autres.

15. Dispositif selon l'une des revendications 13 ou 14, caractérisé en ce que ledit hologramme est enregistré sur ladite surface avant (2) dudit bloc de matériau transparent.

16. Dispositif selon l'une des revendications 13 ou 14, caractérisé en ce que ledit hologramme est enregistré sur une feuille de matériau qui est fixée à ladite surface avant (2) dudit bloc de matériau transparent.

17. Dispositif selon l'une des revendications 4 à 16, caractérisé en ce que ladite source d'irradiation de lumière (4) est une source de lumière dont l'axe est parallèle à celui de ladite rainure (10) dans laquelle la source est logée.

18. Dispositif selon l'une des revendications 4 à 16, caractérisé en ce que ladite source d'irradiation de lumière (4) comprend une pluralité d'émetteurs de lumière disposés le long d'un axe qui est sensiblement parallèle à celui de ladite rainure dans laquelle la source est logée.
